# EUROPEAN PATENT APPLICATION

(11) **EP 4 787 797 A1**
(43) Date of publication of application: **05.08.2026**
(21) Application number: 25155440.8
(22) Date of filing: 31.01.2025
(51) Int. Cl.: H04L 41/0894, H04L 43/0817, G06F 11/07, H04L 41/0654, H04L 41/16

(54) **MONITORING INTERNET OF THINGS DEVICES**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method performed by a first device in a communication network, the method comprising: receiving a maintenance policy from a second device in the communication network, the second device being an Internet of Things, loT, device, the maintenance policy defining a normal operation of the second device based on an operational parameter of the second device; receiving operational data associated with the second device, the operational data comprising one or more values of the operational parameter of the second device; and determining, using the maintenance policy, whether the operational data is indicative of anomalous operation of the second device.

## Description

### FIELD

The present disclosure relates to monitoring Internet of Things (loT) devices. More specifically, the present disclosure relates to detecting anomalous operation of loT devices.

### BACKGROUND

The Internet of Things (loT) is a technology framework that connects physical objects and devices to the Internet, allowing them to collect and exchange data for monitoring, control, and automation. IoT devices typically include computer systems embedded in, or attached to, home appliances and/or industrial appliances. For example, loT devices may include, among other things, factory equipment, vehicles, environmental monitors, lighting equipment, laundry machines, and so on.

IoT ecosystems may include a multitude of loT devices, each having their own unique specification.

### SUMMARY

In a first aspect, there is provided a method performed by a first device in a communication network, the method comprising: receiving a maintenance policy from a second device in the communication network, the second device being an Internet of Things, loT, device, the maintenance policy defining a normal operation of the second device based on an operational parameter of the second device; receiving operational data associated with the second device, the operational data comprising one or more values of the operational parameter of the second device; and determining, using the maintenance policy, whether the operational data is indicative of anomalous operation of the second device.

The method may further comprise modelling, using the maintenance policy, normal operation of the second device, wherein the step of determining whether the operational data is indicative of anomalous operation of the second device comprises comparing the operational data to the modelled normal operation of the second device.

Modelling the normal operation of the second device may comprise training a machine learning model.

The maintenance policy may include one or more pre-defined baseline values or ranges of values for the operational parameter of the second device, the one or more pre-defined baseline values or ranges of values being indicative of the normal operation of the second device. The method may further comprise comparing the modelled normal operation to the one or more pre-defined baseline values or ranges of values, thereby to verify the modelled normal operation or the one or more pre-defined baseline values or ranges of values.

The method may further comprise, in response to a determination of anomalous operation of the second device, providing a recommendation of a corrective action for the second device, the corrective action being selected from one or more pre-defined corrective actions in the maintenance policy.

The step of providing a recommendation of the corrective action for the second device may comprise: assigning an anomaly score to the second device; and selecting the corrective action from the one or more pre-defined corrective actions based on the anomaly score.

The method may further comprise: sending the recommendation of the correction action to the second device; or sending the recommendation of the corrective action to a third device in the communication network.

The method may further comprise: receiving one or more further recommendations of corrective actions for the second device from one or more further devices in the communication network; aggregating the recommendations from the first device and the one or more further devices; selecting, from the aggregated recommendations, a preferred recommendation based on one or more pre-determined criteria; and sending the preferred recommendation to the second device.

The first device may be an loT device.

In a further aspect, there is provided a method performed by a second device in a communication network, the second device being an Internet of Things, loT, device and having a maintenance policy stored thereon, the maintenance policy defining a normal operation of the second device based on an operational parameter of the second device, the method comprising: sending, to a first device in the communication network, the maintenance policy; and sending, to the first device, operational data associated with the second device, the operational data comprising values of the operational parameter of the second device.

The method may further comprise: receiving a recommendation of a corrective action from the first device; and performing the corrective action.

The method may further comprise: sending, to one or more further devices in the communication network, the maintenance policy; sending, to the one or more further devices, the operational data; receiving a plurality of recommendations of corrective actions for the second device from the first device and the one or more further devices; selecting, based on one or more pre-determined criteria, a preferred corrective action from the from the plurality of recommendations of corrective actions; and performing the selected corrective action.

The method may further comprise: sending, to one or more further devices in the communication network, the maintenance policy; sending, to the one or more further devices, the operational data; receiving a recommendation of a corrective action for the second device from the first device or a third device in the communication network; and performing the corrective action.

In a further aspect, there is provided a first device in a communication network, the first device comprising: a processor; and a memory coupled to the processor, the processor configured to cause the first device to: receive a maintenance policy from a second device in the network, the second device being an Internet of Things, loT, device, the maintenance policy defining a normal operation of the second device based on an operational parameter of the second device; receive operational data associated with the second device, the operational data comprising values of the operational parameter of the second device; and determine, using the maintenance policy, whether the operational data is indicative of anomalous operation of the second device.

In a further aspect, there is provided a second device in a communication network, the second device being an Internet of Things, loT, device and comprising: a memory having a maintenance policy stored thereon, the maintenance policy defining a normal operation of the second device based on an operational parameter of the second device; and a processor configured to cause the second device to: send, to a first device in the communication network, the maintenance policy; send, to the first device, operational data associated with the second device, the operational data comprising values indicative of the operational parameter of the second device.

### BRIEF DESCRIPTION OF THE FIGURES

Aspects of the present disclosure will now be described by way of example with reference to the accompanying figures, in which:
Figure 1 is a schematic illustration of a computer system suitable for implementing the methods described herein;
Figure 2 is a schematic illustration showing a communication network in which the methods described herein may be implemented;
Figure 3 is a process flow chart showing certain steps of a method performed by a first device in the computer network;
Figure 4 is a process flow chart showing certain steps of a method performed by a second device in the computer network.

### DETAILED DESCRIPTION

The present inventors have realised that, due to the scale of loT ecosystems and the diversity of loT devices, there is a substantial challenge in managing loT devices. The complexity of loT ecosystems (i.e., networks comprising loT devices) arises from a multitude of loT devices, each with their own unique specifications. This diversity makes it a challenge to ensure a standardized and consistent approach to device management as well as device anomaly detection and repair. Furthermore, many devices (e.g., environmental and/or agricultural monitors) are located in remote and/or hard-to-reach environments, making manual repair challenging, resource-intensive, and time-consuming. Presently, the repair process for loT devices typically comprises sending an engineer to travel to the location of the device, which may be in a remote or challenging environment. In such cases, the engineer may physically reset the device, which can be a demanding task due to geographical inaccessibility or adverse environmental conditions. This manual intervention imposes operational inefficiencies and delays in resolving issues. Furthermore, resetting the device can be disruptive to the loT ecosystem. Accordingly, it is desired to provide means and methods to remotely detect and ascertain anomalies in loT devices, and to identify a least disruptive mitigatory action to be performed by the loT device, without manual intervention from an engineer.

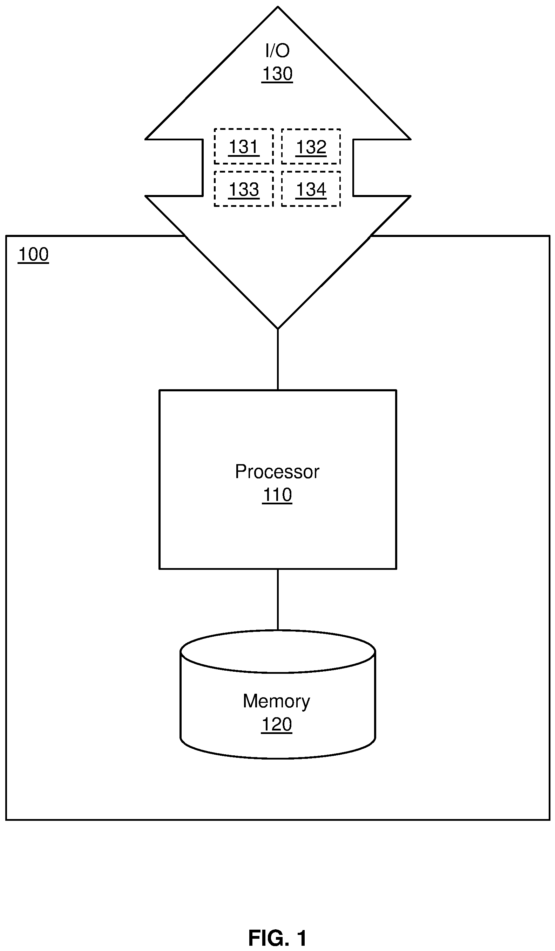

What will now be described with reference to Figures 1 to 4 are systems and processes that address the aforementioned problems.

Figure 1 is a schematic illustration of a computer system 100 capable of performing the methods described herein. The computer system 100 comprises a processor 110 operably coupled to both a memory 120 and an interface (I/O) 130.

The memory 120 may comprise computer program instructions which, when the program is executed by the processor 110, cause the computer system 100 to carry out any of the methods described herein. Alternatively, or additionally, the interface 130 can optionally comprise one or both of a physical interface 131 configured to receive a data carrier having such instructions stored thereon and a receiver 132 configured to receive a data carrier signal carrying such instructions.

The memory 120 may include a volatile computer storage device such as a random-access memory (RAM) and/or a non-volatile storage device, such as a hard disk drive (HDD), a solid-state drive (SDD), a read-only memory (ROM), a flash memory, or any other suitable non-volatile computer storage device. The memory 120 may be formed of a plurality of different storage devices, including both volatile and non-volatile computer storage devices.

The processor 110 may include any known controller capable of executing computer-readable instructions. For example, the processor 110 may be a microprocessor, a microcontroller, a central processing unit (CPU), a graphics processing unit (GPU), or any other known processor.

The interface 130 may comprise a transmitter 133 configured to transmit messages. The transmitter 133 can comprise one or more wireless transmitter modules and/or one or more wired transmitter modules.

The interface 130 can optionally comprise one or more user interface devices 134. For example, the one or more user interface devices 134 may include one or more user input devices (e.g., a keyboard or a mouse) which can receive inputs from a user of the computer system 100. The one or more user interface devices 134 may include one or more user output devices (e.g. a display or a monitor) which can provide an output to the user of the computer system 100. The interface 130 may further comprises one or more network interfaces (e.g. the receiver 132 and the transmitter 133) which enable the computer system 100 to communicate with other computer systems on a network.

It will be appreciated that the computer system 100 described above is merely exemplary and other computer systems (such as those having fewer components, additional components and/or alternative components to those shown in Figure 1) may be used to perform the methods described herein. Examples of computer systems 100 that may be suitable for performing the methods described herein include, but are not limited to, loT devices, personal computers (PCs), hand-held or laptop devices, multiprocessor systems, microprocessor-based systems, set top boxes, programmable consumer electronics, mobile telephones, smartphones, tablets, minicomputers, and/or network appliances (e.g., routers). It will be appreciated that certain loT devices may have one or more network interfaces (e.g., the receiver 132 and the transmitter 133), but may not have a user interface (e.g., the user interface devices 134).

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

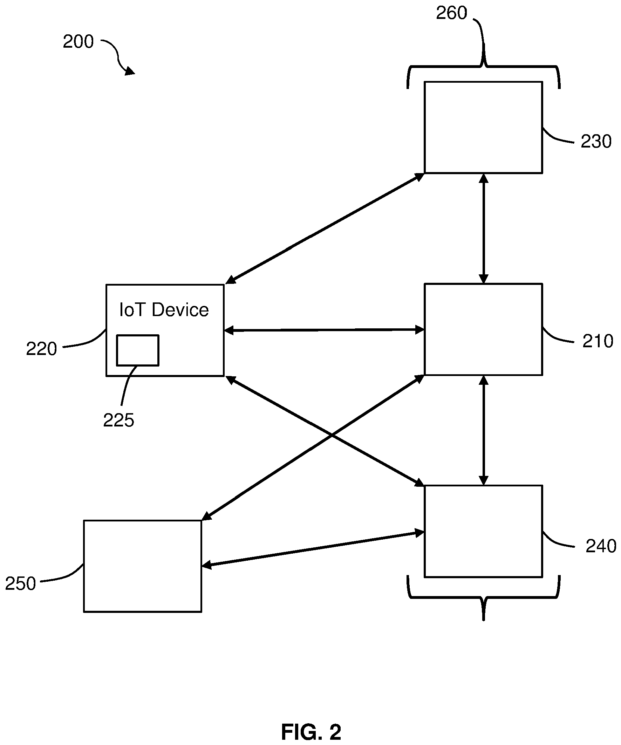

Figure 2 is a schematic illustration of a communication network 200 (i.e., a computer network). The network 200 comprises a plurality of computer systems. Each computer system of the plurality of computer systems may be any type of computer system 100 such as that described above with reference to Figure 1. In this embodiment, the plurality of computer systems comprises a first computer system 210, a second computer system 220, a third computer system 230, a fourth computer system 240, and a fifth computer system 250.

As illustrated in Figure 2, each computer system of the plurality of computer systems may be communicatively coupled to one or more other computer systems of the plurality of computer systems by any suitable communication link.

The communication network 200 can be considered an loT ecosystem. The loT ecosystem is characterized in that at least one computer system of the plurality of computer systems is an loT device. In some examples, each computer system of the plurality of computer systems may be an loT device. In other examples, at least one computer system is an loT device and each of the remaining computer systems may be either an loT device or a non-loT device.

In this embodiment, at least the second computer system 220 is an loT device.

According to embodiments of the present invention, the second computer system 220 comprises a maintenance policy 225 stored thereon. More specifically, the maintenance policy 225 is stored on the memory 120 of the second computer system 220. The maintenance policy 225 includes information about the normal operation (i.e., the normal and/or expected behaviour) of the second computer system 220. The maintenance policy 225 may define a normal operation of the second computer system 220 based on one or more operational parameters of the second computer system 220. For example, the operational parameters may be one or more of: a power consumption of the second computer system 220, a temperature of the second computer system 220, one or more sensor measurements performed by the second computer system 220, a frequency of an action taken by the second computer system 220, and so on. The maintenance policy 225 may include baseline values or ranges of values of the operational parameters that are indicative of normal operation.

For example, the second computer system 220 may comprise a temperature sensor that is configured to measure a temperature at a portion of the second computer system 220 (e.g., at or proximate to the processor 110). The maintenance policy 225 may specify an expected temperature or range of expected temperatures that may be measured by the temperature sensor (i.e., a range of temperatures indicative of normal or expected operation of the second computer system 220). Temperatures measured by the temperature sensor that are outside of the range specified in the maintenance policy 225 may be indicative of undesirable or anomalous operation of the second computer system 220.

The maintenance policy 225 may further include instructions for repairing the second computer system 220 in response to anomalous operation of the second computer system 220 (e.g., operation of the second computer system 220 outside of the normal operation defined in the maintenance policy 225). For example, the instructions may be a corrective action for the second computer system 220 to perform in response to an anomaly being detected. The maintenance policy 225 may include instructions for one or more corrective actions that may be selected based on the detected anomalous operation or based on the severity of the detected anomalous operation. For example, corrective actions may include: resetting, by the second computer system 220, a connection to the network 200; rebooting the second computer system 220; performing a soft reset of the second computer system 220 (i.e., resetting the device without a loss of data); performing a hard reset of the second computer system 220 (i.e., resetting the device with a loss of all data); and/or executing any other computer-readable instructions to remediate the anomalous operation.

The second computer system 220 is configured to, during an onboarding process (i.e., the process of setting up and integrating the second computer system 220 in the network 200), send the maintenance policy 225 to a set of monitoring devices 260 with which the second computer system 220 is communicatively coupled. The maintenance policy 225 may include network setup instructions and details about linked devices to facilitate the onboarding process. One or more of the monitoring devices 260 may be a computer system 100 as described above with reference to Figure 1. For example, the monitoring devices 260 may include both loT and non-loT devices. In this embodiment, the monitoring devices 260 are the first computer system 210, the third computer system 230, and the fourth computer system 240. Accordingly, in this embodiment, the second computer system 220 is configured to transmit the maintenance policy 225 to the first computer system 210, the third computer system 230, and the fourth computer system 240.

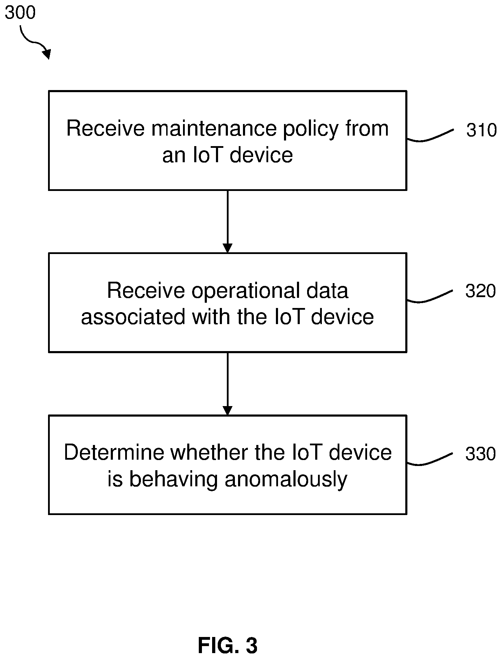

The set of monitoring devices 260 may be configured to monitor the second computer system 220 using the maintenance policy 225. A method by which the second computer system 220 is monitored is described in more detail later below with reference to Figure 3.

Certain of the computer systems in the network 200 may not have sufficient processing resources and/or memory resources to monitor the second computer system 220. For example, relatively simpler loT devices (e.g., smart lightbulbs) in the network 200 may not have sufficient computational resource to monitor the behaviour of the second computer system 220. On the other hand, relatively complex loT devices (e.g., environmental monitoring sensors) may have sufficient computational resource to monitor the behaviour of the second computer system 220. Likewise, certain non-loT computer systems in the network 200 (e.g., non-loT smartphones, laptops, or PCs) may have sufficient computational resource to monitor the behaviour of the second computer system 220. In this embodiment, the set of monitoring devices 260 to which the maintenance policy 225 is transmitted comprises computer systems having sufficient resources to monitor the behaviour of the second computer system 220.

The second computer system 220 may be configured to transmit operational data associated therewith to the set of monitoring devices 260. The operational data includes data associated with the one or more operational parameters of the second computer system 220. In other words, the operational data includes values of the one or more operational parameters of the second computer system 220. The set of monitoring devices 260 may be configured to monitor the behaviour of the second computer system 220 using the maintenance policy 225 and the operational data. For example, each device of the set of monitoring devices 260 may be configured to determine, using the maintenance policy 225, whether the operational data is indicative of anomalous operation of the second computer system 220.

Each monitoring device may be configured to respectively train a machine learning model to learn the normal operation of the second computer system 220. The machine learning model may be augmented by, or generated using, the maintenance policy 225. The monitoring devices 260 may be configured to determine anomalous operation of the second computer system 220 by comparing the operational data to the machine learning models.

In some embodiments, the machine learning model may be an unsupervised machine learning model. For example, the machine learning model may be generated using a k-means clustering algorithm. The cluster centres may be initialized using baseline values defined in the maintenance policy 225. In other embodiments, the machine learning model may be a semi-supervised machine learning model. In such an embodiment, the maintenance policy 225 may include labelled training data for the machine learning model and the operational data may include unlabelled training data. In yet further embodiments, the machine learning model may be a supervised model. In such an embodiment, the maintenance policy 225 may include labelled training data for training the machine learning model. It will be appreciated that each monitoring device of the set of monitoring devices 260 may respectively train a different type of machine learning model.

Advantageously, using the operational data as unlabelled training data allows the machine learning model to learn the normal operation of the second computer system 220 in the loT ecosystem (i.e., the network 200) in which it is deployed. The normal operation of the second computer system 220 in the network 200 may correspond to narrower ranges of values of the operational parameters of the second computer system 220 compared to the ranges of values of the operational parameters specified in the maintenance policy 225.

A respective monitoring device of the monitoring devices 260 may be configured to, in response to determining anomalous operation of the second computer system 220, provide a recommendation of a corrective action for the second computer system 220. The corrective action may be selected from the one or more corrective actions detailed in the maintenance policy 225.

In some embodiments, the respective monitoring device is further configured to assign an anomaly score to the second computer system 220. The anomaly score may be indicative of the severity of the anomalous operation. The corrective action recommended by the monitoring device may be selected from the one or more corrective actions based on the anomaly score. For example, the anomaly score may be a score between 0 and 1. The respective monitoring device may recommend a relatively more disruptive corrective action (e.g., a hard reset) if the anomaly score is equal to or greater than a threshold value. The respective monitoring device may recommend a relatively less disruptive corrective action (e.g., a soft reset) if the anomaly score is less than the threshold value. The maintenance policy 225 and/or the modelled normal operation of the second computer system 220 may include a plurality of threshold values for the anomaly score, each respectively corresponding to a different corrective action.

In some embodiments, the monitoring devices 260 may be configured to vote to provide a preferred recommendation of a corrective action for the second computer system 220. For example, each device of the monitoring devices 260 may provide a respective recommendation of a corrective action for the second computer system 220. Each device of the monitoring devices 260 may send their recommendation to a first monitoring device (e.g., the first computer system 210) of the monitoring devices 260. The first monitoring device may aggregate the recommendations from the monitoring devices 260. The first monitoring device may select, based on one or more pre-determined criteria, a preferred recommendation of a corrective action for the second computer system 220 from the aggregated recommendations. For example, the first monitoring device may select the most common recommendation from the aggregated recommendations. In such cases, the first monitoring device may require the most common recommendation to be recommended by at least a threshold number of monitoring devices 260 (i.e., a minimum number of votes is required).

Alternatively, the first monitoring device may select a least disruptive action from the aggregated recommendations of corrective actions. The first monitoring device may send the preferred recommendation to the second computer system 220. Alternatively, the first monitoring device 210 may not select a preferred recommendation, and the monitoring devices 260 may re-vote after a pre-determined amount of time (e.g., 60 seconds) based on updated operational data received after the pre-determined amount of time.

In the above embodiments, the set of monitoring devices 260 comprises three computer systems. In other embodiments, however, the set of monitoring devices 260 comprises a different number of such computer systems, such as more than three.

While Figure 2 depicts a network 200 having an arrangement of five computer systems in an loT ecosystem, it will be appreciated that the network 200 may have a different number of computer systems. Specially, the network 200 may comprises one or more computer systems communicatively coupled together, wherein at least one of the computer systems is an loT device.

Figure 3 is a process flowchart showing certain steps of a method 300 performed by a first device in the communication network 200.

At a first step 310, the first device receives a maintenance policy from a second device in the network 200, the second device being an loT device. The received maintenance policy is transmitted to the first device by the second device.

The first device may be any computer system in the network 200 that is communicatively coupled to the second device, wherein the second device is an loT device. For example, with reference to Figure 2, the first device may be a monitoring device from the set of monitoring devices 260 communicatively coupled with the second computer system 220. More specifically, the first device may be any of the first computer system 210, the third computer system 230, and the fourth computer system 240.

The maintenance policy includes information about the normal operation (i.e., a normal and/or expected behaviour) of the second device. The maintenance policy may define a normal operation of the second device based on one or more operational parameters of the second device. For example, the operational parameters may be one or more of: a power consumption of the second device, a temperature of the second device, one or more sensor measurements performed by the second device, a frequency of an action taken by the second device, and so on. The maintenance policy may include baseline values or ranges of values of the operational parameters that are indicative of normal operation,

The maintenance policy may further include instructions for repairing the second device in response to anomalous operation of the second device (e.g., operation of the second device outside of the normal operation defined in the maintenance policy). For example, the instructions may be a corrective action for the second device to perform in response to an anomaly being detected. The maintenance policy may include instructions for one or more corrective actions that may be selected based on the detected anomalous operation or based on the severity of the detected anomalous operation. For example, corrective actions may include: resetting, by the second device, a connection to the network 200; rebooting the second device; performing a soft reset of the second device (i.e., resetting the device without a loss of data); performing a hard reset of the second device (i.e., resetting the device with a loss of all data); and/or executing any other computer-readable instructions to remedy the anomalous operation.

At a second step 320, the first device receives operational data associated with the second device. The operational data comprises values of the one or more operational parameters of the second device. The operational data may be transmitted by the second device to the first device.

The first device may receive operational data associated with the second device at regular time intervals (e.g., 60 second intervals).

At a third step 330, the first device determines, using the maintenance policy, whether the operational data is indicative of anomalous operation of the second device.

In some embodiments, the first device may determine anomalous behaviour of the second device by comparing the operational data to the normal behaviour as detailed in the maintenance policy (e.g., by comparing the operational data to the baseline values or ranges of values).

In some embodiments, the first device may model normal behaviour of the second device. The normal behaviour is modelled using the maintenance policy and/or the operational data. The first device may train a machine learning model to learn the normal operation of the second device. The machine learning model may be augmented by, or generated using, the maintenance policy. The first device may determine anomalous behaviour of the second device by comparing the operational data to the modelled normal behaviour.

In some embodiments, the machine learning model may be an unsupervised machine learning model. For example, the machine learning model may be generated using a k-means clustering algorithm. The cluster centres may be initialized using baseline values defined in the maintenance policy. In other embodiments, the machine learning model may be a semi-supervised machine learning model. In such an embodiment, the maintenance policy may include labelled training data for the machine learning model and the operational data may include unlabelled training data. In yet further embodiments, the machine learning model may be a supervised model. In such an embodiment, the maintenance policy may include labelled training data for training the machine learning model.

The method 300 may further comprise comparing the modelled normal behaviour to the baseline values or ranges of values, thereby to verify the modelled normal behaviour or the baseline values or ranges of values. For example, the comparison may be used to verify that the modelled normal behaviour does not extend outside the baseline values or ranges of values defined in the maintenance policy. Furthermore, the machine learning models may be used to update the maintenance policy to include information on modelled normal behaviour of the second device in an environment in which the second device is deployed.

The method 300 may further comprise, in response to a determination of anomalous behaviour of the second device, providing a recommendation of a corrective action for the second device. The corrective action may be selected from the one or more corrective actions detailed in the maintenance policy.

In some embodiments, the first device assigns an anomaly score to the anomalous second device. The anomaly score may be indicative of the severity of the anomalous behaviour. The recommendation of the corrective action may be selected from the one or more corrective actions based on the anomaly score. For example, the anomaly score may be a score between 0 and 1. The first device may recommend a relatively more disruptive corrective action (e.g., resetting the device) if the anomaly score is equal to or greater than a threshold value. The first device may recommend a relatively less disruptive corrective action (e.g., a soft reset) if the anomaly score is less than the threshold value. The maintenance policy and/or the modelled normal behaviour of the second device may include a plurality of threshold values for the anomaly score, each respectively corresponding to a different corrective action.

In an embodiment, the method 300 may further comprise sending the recommendation of the corrective action to the second device.

In some embodiments, the method 300 may instead comprise sending the recommendation of the corrective action to a third device in the network 200. The third device may be a monitoring device from the set of monitoring devices 260 as described above in conjunction with Figure 2.

In some embodiments, the first device may receive one or more further recommendations of corrective actions for the second device from one or more further devices in the communication network. The first device may aggregate the recommendations from the first device and the one or more further devices. The first device may select a preferred recommendation from the aggregated recommendations based on one or more pre-determined criteria. For example, the first device may select the most common recommendation from the aggregated recommendations. Alternatively, the first device may select a least disruptive corrective action from the aggregated recommendations of corrective actions.

In the above embodiments, the first device receives a maintenance policy from the second device. However, in other embodiments, the first device may receive a plurality of maintenance policies from a plurality of loT devices. For example, the first device may receive the maintenance policy from the second device and one or more further maintenance policies from one or more further loT devices in the network 200. The first device may further receive operational data associated with each device of the plurality of loT devices. The first device may determine, for each device of the plurality of loT devices, whether the corresponding operational data is indicative of anomalous operation of that device using the corresponding maintenance policy. In such an embodiment, the first device may model normal behaviour associated with each device of the plurality of loT devices. The first device may model normal behaviour associated with each device of the plurality of loT devices using the same machine learning model. Advantageously, modelling each device with a single machine learning algorithm is less memory intensive and facilitates transfer learning between devices in the network 200. Alternatively, the first device may model normal behaviour associated with each device of the plurality of devices by training separate machine learning models for each device.

In some embodiments, the first device may be an loT device.

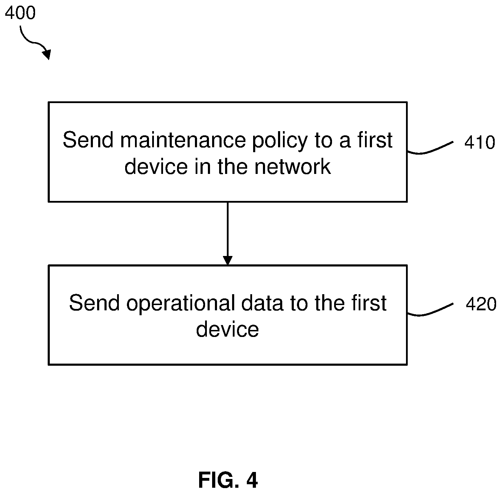

Figure 4 is a process flowchart depicting certain steps of a method 400 performed by a second device in the network 200. The second device is an loT device and has a maintenance policy stored thereon. The maintenance policy may be stored on a memory of the second device.

The second device may be any loT device in the network 200. For example, with reference to Figure 2, the second device may be the second computer system 220. The first device may be any device communicatively coupled with the second device. For example, the first device may be any of the monitoring devices 260 communicatively coupled with the second computer system 220 (i.e., the first device may be any of the first computer system 210, the third computer system 230, or the fourth computer system 240).

At a first step 410, the second device sends the maintenance policy to a first device in the network 200.

The maintenance policy includes information on the normal operation (i.e., a normal and/or expected behaviour) of the second device. The maintenance policy may define a normal operation of the second device based on an operational parameter of the second device. For example, the operational parameters may be one or more of: a power consumption of the second device, a temperature of the second device, one or more sensor measurements performed by the second device, a frequency of an action taken by the second device, and so on. The maintenance policy may include baseline values or ranges of values of the operational parameters that are indicative of normal operation.

The maintenance policy may further include instructions for repairing the second device in response to anomalous operation of the second device (e.g., operation of the second device outside of the normal operation defined in the maintenance policy). For example, the instructions may be a corrective action for the second device to perform in response to an anomaly being detected. The maintenance policy may include instructions for one or more corrective actions that may be selected based on the detected anomalous operation or based on the severity of the detected anomalous operation. For example, corrective actions may include: resetting, by the second device, a connection to the network 200; rebooting the second device; performing a soft reset of the second device (i.e., resetting the device without a loss of data); performing a hard reset of the second device (i.e., resetting the device with a loss of all data); and/or executing any other computer-readable instructions to remedy the anomalous operation.

At a second step 420, the second device sends operational data associated with the second device to the first device. The operational data comprises values of the one or more operational parameters of the second device.

The first device may receive operational data associated with the second device at regular time intervals (e.g., 60 second intervals).

The method 400 may further comprise receiving a recommendation of a corrective action from the first device. The second device may perform the corrective action.

In some embodiments, the second device may send the maintenance policy to one or more further devices in the communication network. The second device may send the operational data to the one or more further devices. The second device may select, based on one or more pre-determined criteria, a preferred corrective action from the plurality of recommendations of corrective actions. For example, the second device may select the most recommended corrective action from the plurality of recommendations of corrective actions. Alternatively, the first monitoring device may select a least disruptive action from the plurality of recommendations of corrective actions. The second device may perform the selected corrective action.

In some embodiments, the second device may receive a recommendation of a corrective action from a third device in the communication network. The third device may be, for example, a monitoring device of the monitoring devices 260.

The preceding description is presented to enable any person skilled in the art to make and use the systems and/or perform the methods of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

## Claims

1. A method performed by a first device in a communication network, the method comprising:
receiving a maintenance policy from a second device in the communication network, the second device being an Internet of Things, loT, device, the maintenance policy defining a normal operation of the second device based on an operational parameter of the second device;
receiving operational data associated with the second device, the operational data comprising one or more values of the operational parameter of the second device; and
determining, using the maintenance policy, whether the operational data is indicative of anomalous operation of the second device.

2. The method of claim 1, further comprising modelling, using the maintenance policy, normal operation of the second device, wherein the step of determining whether the operational data is indicative of anomalous operation of the second device comprises comparing the operational data to the modelled normal operation of the second device.

3. The method of claim 2, wherein modelling the normal operation of the second device comprises training a machine learning model.

4. The method of claim 2 or claim 3, wherein:
the maintenance policy includes one or more pre-defined baseline values or ranges of values for the operational parameter of the second device, the one or more pre-defined baseline values or ranges of values being indicative of the normal operation of the second device; and
the method further comprises comparing the modelled normal operation to the one or more pre-defined baseline values or ranges of values, thereby to verify the modelled normal operation or the one or more pre-defined baseline values or ranges of values.

5. The method of any preceding claim, wherein the method further comprises, in response to a determination of anomalous operation of the second device, providing a recommendation of a corrective action for the second device, the corrective action being selected from one or more pre-defined corrective actions in the maintenance policy.

6. The method of claim 5, wherein the step of providing a recommendation of the corrective action for the second device comprises:
assigning an anomaly score to the second device; and
selecting the corrective action from the one or more pre-defined corrective actions based on the anomaly score.

7. The method of claim 5 or 6, further comprising:
sending the recommendation of the correction action to the second device; or
sending the recommendation of the corrective action to a third device in the communication network.

8. The method of claim 5 or 6, further comprising:
receiving one or more further recommendations of corrective actions for the second device from one or more further devices in the communication network;
aggregating the recommendations from the first device and the one or more further devices;
selecting, from the aggregated recommendations, a preferred recommendation based on one or more pre-determined criteria; and
sending the preferred recommendation to the second device.

9. The method of any preceding claim, wherein the first device is an loT device.

10. A method performed by a second device in a communication network, the second device being an Internet of Things, loT, device and having a maintenance policy stored thereon, the maintenance policy defining a normal operation of the second device based on an operational parameter of the second device, the method comprising:
sending, to a first device in the communication network, the maintenance policy; and
sending, to the first device, operational data associated with the second device, the operational data comprising values of the operational parameter of the second device.

11. The method of claim 10, further comprising:
receiving a recommendation of a corrective action from the first device; and
performing the corrective action.

12. The method of claim 10, further comprising:
sending, to one or more further devices in the communication network, the maintenance policy;
sending, to the one or more further devices, the operational data;
receiving a plurality of recommendations of corrective actions for the second device from the first device and the one or more further devices;
selecting, based on one or more pre-determined criteria, a preferred corrective action from the from the plurality of recommendations of corrective actions; and
performing the selected corrective action.

13. The method of claim 10, further comprising:
sending, to one or more further devices in the communication network, the maintenance policy;
sending, to the one or more further devices, the operational data;
receiving a recommendation of a corrective action for the second device from the first device or a third device in the communication network; and
performing the corrective action.

14. A first device in a communication network, the first device comprising:
a processor; and
a memory coupled to the processor, the processor configured to cause the first device to:
receive a maintenance policy from a second device in the network, the second device being an Internet of Things, loT, device, the maintenance policy defining a normal operation of the second device based on an operational parameter of the second device;
receive operational data associated with the second device, the operational data comprising values of the operational parameter of the second device; and
determine, using the maintenance policy, whether the operational data is indicative of anomalous operation of the second device.

15. A second device in a communication network, the second device being an Internet of Things, loT, device and comprising:
a memory having a maintenance policy stored thereon, the maintenance policy defining a normal operation of the second device based on an operational parameter of the second device; and
a processor configured to cause the second device to:
send, to a first device in the communication network, the maintenance policy; and
send, to the first device, operational data associated with the second device, the operational data comprising values indicative of the operational parameter of the second device.
